# EUROPÄISCHE PATENTSCHRIFT

(11) **EP 3 577 012 B1**
(45) Veröffentlichungstag und Bekanntmachung des Hinweises auf die Patenterteilung: **03.03.2021**
(21) Anmeldenummer: 18704153.8
(22) Anmeldetag: 23.01.2018
(51) Int. Cl.: B62D 1/20

(54) **LÄNGSVERSTELLBARE LENKWELLE FÜR EIN KRAFTFAHRZEUG UND PROFILHÜLSE FÜR EINE LENKWELLE**
LENGTH-ADJUSTABLE STEERING SHAFT FOR A MOTOR VEHICLE, AND PROFILED SLEEVE FOR A STEERING SHAFT
ARBRE DE DIRECTION RÉGLABLE EN LONGUEUR POUR UN VÉHICULE AUTOMOBILE ET DOUILLE PROFILÉE POUR UN ARBRE DE DIRECTION

(30) Priorität: 02.02.2017 DE 102017201709
(43) Veröffentlichungstag der Anmeldung: 11.12.2019
(73) Patentinhaber: thyssenkrupp Presta AG, 9492 Eschen (LI); thyssenkrupp AG, 45143 Essen (DE)
(72) Erfinder: DUROT, Janick, 9443 Widnau (CH); BREUER, Marius, 48307 Rochester Hills, Michigan (US)
(74) Vertreter: thyssenkrupp Intellectual Property GmbH
(86) Internationale Anmeldenummer: PCT/EP2018/051542
(87) Internationale Veröffentlichungsnummer: WO 2018/141580

(56) Entgegenhaltungen:
- EP-A1- 0 755 843
- EP-A2- 1 759 955
- DE-U1-202010 017 747
- FR-A1- 2 964 355
- JP-A- 2003 054 422
- JP-A- 2003 306 152
- US-A- 5 383 811

## Beschreibung

Die Erfindung betrifft eine längsverstellbare Lenkwelle für ein Kraftfahrzeug, mit einem inneren Wellenteil das in einem äußeren Wellenteil koaxial und in axialer Richtung der Lenkwelle verschiebbar aufgenommen ist, wobei die beiden Wellenteile im Querschnitt ineinander greifende Profile zur Übertragung eines Drehmoments aufweisen und zwischen dem inneren Wellenteil und dem äußeren Wellenteil eine Profilhülse angeordnet ist, wobei die Profilhülse in einem ersten Endbereich mindestens einen radial vorstehenden Anschlag zur Anlage an einer Stirnfläche des inneren Wellenteils oder des äußeren Wellenteils in der einen axialen Richtung aufweist, und dass ein radialer Vorsprung an einem der beiden Wellenteile vorgesehen ist zur Anlage der Profilhülse an dem inneren Wellenteil oder dem äußeren Wellenteil in der entgegengesetzten axialen Richtung, wobei ein Endbereich des inneren Wellenteils oder des äußeren Wellenteils mit dem radialen Vorsprung zur Anlage der Profilhülse in der entgegengesetzten axialen Richtung versehen ist.

Aus der DE 20 2010 017 747U1 ist eine derartige längsverstellbare Lenkwelle für ein Kraftfahrzeug bekannt. Um ein Verrutschen der Profilhülse auf dem inneren Wellenteil in Axialrichtung zu verhindern, ist das innere Wellenteil mit zwei radial vorspringenden Rastnasen versehen, die zu beiden Seiten der Profilhülse angeordnet sind und diese fixieren. Nachteil dieser Lösung ist, dass zwei Rastnasen erforderlich sind, um die Profilhülse in axialer Richtung auf dem inneren Wellenteil zu sichern, und dass es auf Grund der unterschiedlichen Wärmeausdehnungskoeffizienten der Profilhülse und des inneren Wellenteils zu Zwangszuständen und somit zu nachteiligen Verformungen der Profilhülse kommt.

Aus der EP 0 755 843 A1 ist eine I wellenartige Konstruktion mit einer Profilhülse bekannt. Die Profilhülsenfixierung ist jedoch relativ aufwendig.

Die JP-A-2003 054422 offenbart eine Lenkwelle mit den Merkmalen des Oberbegriffs des Anspruchs 1.

Aufgabe der Erfindung ist es, eine Lenkwelle der eingangs genannten Art mit einer verbesserten Profilhülsenfixierung bereitzustellen.

Gelöst wird diese Aufgabe hinsichtlich der Lenkwelle durch die Merkmale des Anspruchs 1. Vorteilhafte Ausgestaltungsformen der Erfindung sind in den Ansprüchen 2 bis 5 beschrieben.

Bei der erfindungsgemäßen Lenkwelle weist die Profilhülse im ersten Endbereich einen in axialer Richtung offenen Schlitz auf, in den der radiale Vorsprung (13) hinein ragt. Der radiale Vorsprung kann erfindungsgemäß an dem inneren Wellenteil bzw. dem äußeren Wellenteil vorgesehen sein, wobei der Vorsprung die Verschiebung der Profilhülse in der entgegengesetzten axialen Richtung verhindert. Alternativ ist das innere Wellenteil oder das äußere Wellenteil mit dem radialen Vorsprung versehen.

Somit ist bevorzugt ein Endbereich des inneren Wellenteils oder des äußeren Wellenteils mit dem radialen Vorsprung zur Anlage der Profilhülse in der entgegengesetzten Axialrichtung versehen. Bei der erfindungsgemäßen Lenkwelle, bei der die Profilhülse auf dem inneren Wellenteil angeordnet ist, weist die Profilhülse in einem ersten Endbereich, der im montierten Zustand ein freies Ende des inneren Wellenteils umschließt, mindestens einen radial nach innen ragenden Anschlag zur Anlage an einer Stirnfläche des inneren Wellenteils in der einen axialen Richtung auf.

Bei der alternativen erfindungsgemäßen Lenkwelle, bei der die Profilhülse in dem äußeren Wellenteil fest aufgenommen ist, weist die Profilhülse in einem ersten Endbereich mindestens einen radial nach außen ragenden Anschlag zur Anlage an einer Stirnfläche des äußeren Wellenteils in der einen axialen Richtung auf.

Aufgrund des radial vorstehenden Anschlags kann die Profilhülse in der einen axialen Richtung nur so weit auf das innere Wellenteil aufgeschoben werden bzw. in das äußere Wellenteil hinein geschoben werden, bis dessen freies Ende den ersten Endbereich der Profilhülse erreicht und dort die Axialbewegung infolge des Anschlags gestoppt wird. Damit die Profilhülse nicht entgegen der Aufsteckrichtung in die entgegengesetzte axiale Richtung vom inneren Wellenteil abgezogen bzw. aus dem inneren des äußeren Wellenteils heraus gezogen werden kann, wird nach dem Aufstecken oder Einstecken der Profilhülse der Endbereich des inneren Wellenteils oder des äußeren Wellenteils mit einem radial nach außen oder innen ragenden Vorsprung versehen, an dem die Profilhülse in der entgegengesetzten Axialrichtung anliegt, so dass sie nicht abgezogen werden kann. Durch die erfindungsgemäßen Maßnahmen wird also die Profilhülse in beiden Axialrichtungen auf dem inneren Wellenteil oder in dem äußeren Wellenteil fixiert, wobei mit Vorteil am inneren Wellenteil oder am äußeren Wellenteil nur ein einziger Anschlag ausgebildet sein muss im Gegensatz zum Stand der Technik DE 20 2010 017 747U1, wo zwei Rastnasen für die axiale Fixierung der Profilhülse erforderlich sind.

Da die Profilhülse gegen Verschiebung in beide Axialrichtungen erfindungsgemäß lediglich in einem einzigen axialen Endbereich fixiert ist, bleibt der andere axiale Endbereich bei Wärmeausdehnung oder Kontraktion frei verschiebbar, so dass mit Vorteil keine mechanischen Spannungen, Aufwölbungen oder Verkantungen der zwischen dem inneren Wellenteil und dem äußeren Wellenteil angeordneten Profilhülse auftreten können, wobei ein Blockieren der Längsverschieblichkeit des äußeren Wellenteils auf dem inneren Wellenteil mit Vorteil vermieden wird. Die einseitige axiale Fixierung der Profilhülse am inneren Wellenteil oder am äußeren Wellenteil hat außerdem den Vorteil, dass die Profilhülse hinsichtlich ihrer axialen Länge mit wesentlich größeren Fertigungstoleranzen hergestellt werden kann, was die Herstellung vereinfacht und die Herstellungskosten verringert.

Erfindungsgemäß weist die Profilhülse im genannten ersten Endbereich einen in axialer Richtung offenen Schlitz auf, in den der radiale Vorsprung des inneren Wellenteils oder des äußeren Wellenteils eingreift. Der radiale Vorsprung des inneren Wellenteils oder des äußeren Wellenteils kann daher an einer geschlossenen Axialseite des Schlitzes anliegen, die der offenen Axialseite des Schlitzes gegenüberliegt. Dies ermöglicht eine axiale Versetzung des radialen Vorsprungs im Abstand zur Stirnfläche des inneren Wellenteils oder des äußeren Wellenteils, wodurch die Fertigung des radialen Vorsprungs erleichtert wird, insbesondere wenn dieser gemäß einer weiteren vorteilhaften Ausführungsform der Erfindung als Materialaufwurf des inneren Wellenteils oder des äußeren Wellenteils ausgebildet ist.

In weiterer vorteilhafter Ausgestaltung ist der Vorsprung als Verstemmung in axialer Richtung ausgehend von der Stirnfläche des inneren Wellenteils oder des äußeren Wellenteils aus eingebracht. Eine Verstemmung in axialer Richtung, bei der der Vorsprung aus dem Material des inneren Wellenteils oder des äußeren Wellenteils gedrückt wird und das Material radial nach außen bzw. nach innen ausweicht, ist vorteilhafter als eine Verstemmung, die direkt in radialer Richtung eingebracht wird, denn zum einen müsste die radiale Verstemmung von innen nach außen erfolgen, was bei einem als geschlossenem Rohr ausgebildeten inneren Wellenteil schwierig ist, und zum zweiten könnte eine radiale Verstemmung zu unerwünschten Verformungen des inneren Wellenteils bzw. des äußeren Wellenteils führen, so dass sich die Wellenteile bei einer Teleskopoperation verklemmen könnten. Bei einer Verstemmung in axialer Richtung verhält sich das Wellenteil wesentlich steifer und behält bis auf den erwünschten radialen Vorsprung seine übrige Form bei. Somit können ungewünschte Verformungen des Querschnitts des inneren Wellenteils auf Grund des radialen Vorsprungs vermieden werden.

Eine weitere vorteilhafte Ausgestaltung der Erfindung sieht vor, dass die Profilhülse in axialer Richtung neben dem inneren Ende des Schlitzes mit einer Entlastungsöffnung versehen ist. Bei dem weiter oben genannten Verstemmungsvorgang kann der entstehende radiale Vorsprung auch in axialer Richtung gegen das geschlossene axial Ende des Schlitzes gepresst werden, wobei es zu einer plastischen Verformung der Profilhülse kommen kann. Damit eine solche plastische Verformung nicht zu einer Verspannung der gesamten Profilhülse mit Aufwölbungen und Festklemmen gegenüber dem äußeren Wellenteil führen kann, ist die erfindungsgemäße Entlastungsöffnung vorgesehen. Diese verringert die Steifigkeit des zwischen Entlastungsöffnung und geschlossener Axialseite des Schlitzes verbleibenden Hülsenmaterials, welches sich in Richtung Entlastungsöffnung verformen kann, ohne dass es zu einer Verformung des gesamten Körpers der Profilhülse kommt. Das zwischen der Entlastungsöffnung und der geschlossenen Axialseite des Schlitzes verbleibende Hülsenmaterial weist bevorzugt eine Breite gemessen in axialer Richtung von weniger als 10mm, besonders bevorzugt von weniger als 5mm auf.

In vorteilhafter Ausgestaltung ist der radial nach innen ragende Anschlag als umlaufender Bund der Profilhülse ausgestaltet.

Ein Ausführungsbeispiel der Erfindung wird nachfolgend anhand der Zeichnungen näher erläutert. Die Figuren zeigen im Einzelnen:
- Figur 1:: eine perspektivische Darstellung einer erfindungsgemäßen Lenkwelle mit einem inneren Wellenteil, einer auf dem inneren Wellenteil zu fixierenden Profilhülse und einem auf die Profilhülse und das inneren Wellenteil aufsteckbaren äußeren Wellenteil vor der Montage;
- Figur 2:: einen vergrößerten Ausschnitt aus Figur 1, wobei die Profilhülse bereits auf das innere Wellenteil aufgeschoben und fixiert ist;

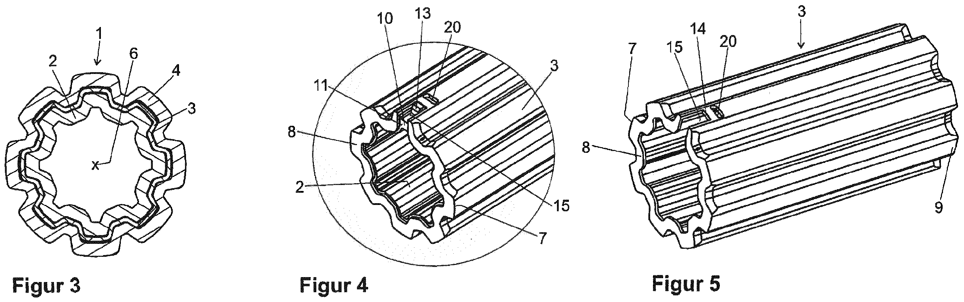

- Figur 3:: einen Querschnitt durch eine erfindungsgemäße Lenkwelle;
- Figur 4:: eine perspektivische Detaildarstellung eines inneren Wellenteils mit darauf montierter Profilhülse;
- Figur 5:: eine perspektivische der Darstellung einer Profilhülse;
- Figur 6:: einen Längsschnitt eines Teilbereichs der erfindungsgemäßen Lenkwelle im montierten Zustand;
- Figur 7:: einen vergrößerten Teilbereich des inneren Wellenteils mit Profilhülse im Schnitt während eines Verstemmungsvorgangs zur Fixierung der Profilhülse auf dem inneren Wellenteil;
- Figur 8:: ein inneres Wellenteil mit Profilhülse ähnlich Figur 7, jedoch mit einem alternativen Verstemmungsvorgang;
- Figur 9:: Detailansicht einer teilweise auseinander gezogenen Lenkwelle in einer weiteren Ausführungsform, wobei die Profilhülse in dem äußeren Wellenteil eingeschoben und fixiert ist;
- Figur 10:: einen vergrößerten Teilbereich einer weiteren alternativen Ausführungsform des inneren Wellenteils mit Profilhülse mit einem Vorsprung zur Fixierung der Profilhülse auf dem inneren Wellenteil.

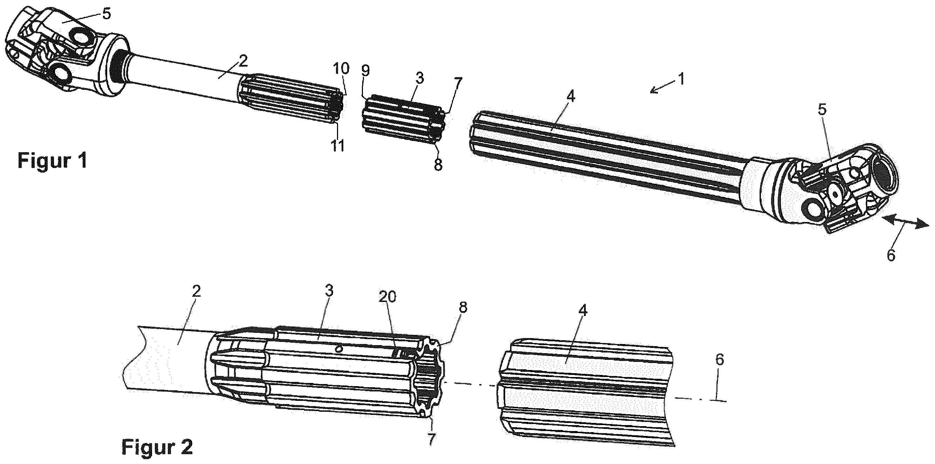

Figur 1 zeigt eine erfindungsgemäße Lenkwelle 1 im Zustand vor der Montage. Diese umfasst ein inneres Wellenteil 2, eine auf dem inneren Wellenteil 2 zu fixierende Profilhülse 3 und ein äußeres Wellenteil 4, welches im montierten Zustand über das mit der Profilhülse 3 versehene innere Wellenteil 2 geschoben wird, so dass die Wellenteile 2, 4 in axialer Richtung 6 zueinander telekopierbar ineinandergreifen. Die axiale Richtung 6 der Lenkwelle 1 entspricht der Drehachsrichtung.

Das innere Wellenteil 2 und das äußere Wellenteil 4 sind jeweils an ihren nicht ineinandergreifenden Enden mit jeweils einem Kardangelenk 5 versehen, wobei die Kardangelenke 5 zur Umlenkung der Drehbewegung der Lenkwelle 1 und zur Anpassung an die Erfordernisse im Kraftfahrzeug dienen. Hierzu dient auch die Verstellbarkeit in axialer Richtung 6.

Um ein Drehmoment von einem Wellenteil auf das andere zu übertragen, besitzen die Wellenteile 2, 4 ein gewelltes bzw. zackiges Profil, wobei ein Außenprofil der inneren Lenkwelle 2 mit einem Innenprofil der äußeren Lenkwelle 4 in Drehrichtung formschlüssig ineinandergreift. Zwischen dem Außenprofil des inneren Wellenteils 2 und dem inneren Profil des äußeren Wellenteils 4 ist jedoch noch ein kleiner gewellter, in sich geschlossener Hohlraum vorgesehen, in welchem die Profilhülse 3 angeordnet ist. Die Profilhülse 3 hat daher ebenfalls ein gewelltes oder gezacktes Profil, welches an der Innenseite auf das Außenprofil des inneren Wellenteils 2 und auf seiner Außenseite an das Innenprofil des äußeren Wellenteils 4 angepasst ist. Mit anderen Worten weist die Profilhülse 3 auf der Innenseite ein zum Außenprofil des inneren Wellenteils 2 und auf der Außenseite ein zum Innenprolfil des äußeren Wellenteils 4 korrespondierendes Querschnittsprofil auf. Aufgabe der Profilhülse 3 ist es, eine möglichst reibungsarme Verschiebung des äußeren Wellenteils 4 gegenüber dem inneren Wellenteil 2 in axialer Richtung 6 zu ermöglichen und dabei Drehmomente zwischen den Wellenteilen 2, 4 möglichst spielfrei zu übertragen.

Die Profilhülse 3 kann aus Metall, Kunststoff oder anderen Materialien bzw. Materialkombinationen bestehen und zwischen ihrer äußeren Oberfläche und dem darauf gleitenden äußeren Wellenteil 4 kann ein Schmiermittel vorgesehen sein.

Um die Profilhülse 3 auf dem inneren Wellenteil 2 zu fixieren, damit diese beim Darübergleiten des äußeren Wellenteils 4 in axialer Richtung 6 nicht vom inneren Wellenteil 2 abrutschen kann, sondern in axialer Richtung 6 unverrückbar am bzw. auf dem inneren Wellenteil 2 fixiert bleibt, sind die nachfolgend beschriebenen erfindungsgemäßen Maßnahmen vorgesehen.

Die Profilhülse 3 ist daher in einem ersten Endbereich 7 mit einem als Anschlag ausgebildeten radial nach innen ragenden Bund 8 ausgestattet, der den freien Hindurchgang des inneren Wellenteils 2 verhindert. Bei der Montage wird die Profilhülse 3 mit ihrem zweiten, offenen Endbereich 9 voran über das freie Ende 10 des inneren Wellenteils 2 geschoben. Die Profilhülse 3 gleitet dabei über das äußere Profil des inneren Wellenteils 2, bis das freie Ende 10 des inneren Wellenteils 2 im ersten Endbereich 7 der Profilhülse 3 ankommt und eine Stirnfläche 11 des inneren Wellenteils 2 in der einen axialen Richtung (= Aufschieberichtung) an dem radial nach innen ragenden Bund 8 der Profilhülse 3 anschlägt. Der Bund 8 dient hier also als Anschlag 8 für die Begrenzung der Bewegung der Profilhülse 3 in der einen axialen Richtung 6 beim Aufschieben der Profilhülse 3 auf das innere Wellenteil 2.

Noch ist aber die Profilhülse 3 nicht in der anderen axialen Richtung 6, nämlich entgegen der Aufschieberichtung gesichert, so dass sie ohne weiteres wieder vom inneren Wellenteil 2 abgezogen werden könnte. Für die Fixierung in der anderen axialer Richtung 6 ist ein in einem Endbereich 12 des inneren Wellenteils 2, der auch das freie Ende 10 umfasst, angeordneter Vorsprung 13 des inneren Wellenteils 2 vorgesehen, der radial nach außen ragt und an der Profilhülse 3 in der der Aufschieberichtung entgegengesetzten axialen Richtung 6 anliegt. Der Vorsprung 13 ist gegenüber der Stirnfläche 11 des inneren Wellenteils 2 um einige Millimeter nach innen versetzt angeordnet.

Um eine entsprechende axiale Anschlagfläche 14 bereitzustellen, ist die Profilhülse 3 bereits in ihrem ersten Endbereich 7 mit einem in axialer Richtung 6 verlaufenden Schlitz 15 versehen, der im ersten Endbereich 7 der Profilhülse 3 in axialer Richtung 6 offen ist, in axialer Richtung 6 nach innen verläuft und an der axialen Anschlagfläche 14 endet. In den Schlitz 15 der Profilhülse 3 greift der Vorsprung 13 des inneren Wellenteils 2 ein und liegt an der axialen Anschlagfläche 14 formschlüssig an, so dass die Profilhülse 3 entgegen der Aufschieberichtung vom inneren Wellenteil 2 nicht abgezogen werden kann und letztlich in beiden axialen Richtungen 6 am inneren Wellenteil 2 fixiert ist.

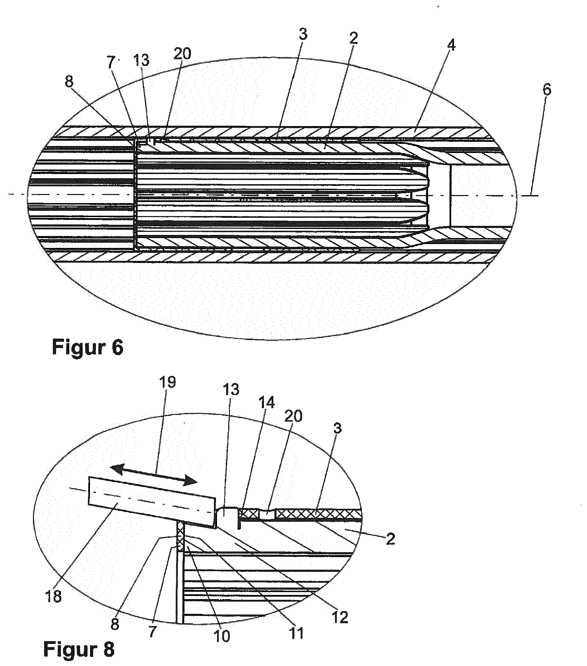

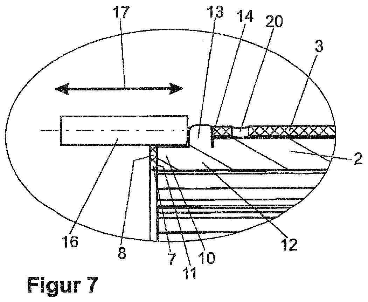

Die Figuren 7 und 8 zeigen zwei unterschiedliche Verfahren zur Ausformung des Vorsprungs 13 nach dem Aufschieben der Profilhülse 3 während der Montage der erfindungsgemäßen Lenkwelle 1. Der radiale Vorsprung 3 wird durch Materialaufwurf des inneren Wellenteils 2 erzeugt. Im vorliegenden Ausführungsbeispiel wird der Vorsprung 13 als Verstemmung in axialer Richtung 6 ausgehend von der Stirnfläche 11 des inneren Wellenteils 2 eingebracht. Figur 7 zeigt ein Verstemmwerkzeug 16, welches in Verstemmrichtung 17, die der axialen Richtung 6 entspricht, bewegt wird. Trotzdem die Verstemmungrichtung 17 in axialer Richtung 6 liegt, wird das Material des inneren Wellenteils 2 radial nach außen aufgeworfen, so dass ein radialer Vorsprung 13 entsteht. Dass sich das Material des inneren Wellenteils 2 nur nach außen aufwirft und nicht nach innen liegt daran, dass das Verstemmwerkzeug 16 nur einen radial äußeren Randbereich des inneren Wellenteils 2 erfasst und verformt. Ein wesentlich stärkerer und radial weiter innen gelegener Wandbereich des inneren Wellenteils 2 bleibt auch im Bereich des Vorsprungs 13 unverformt.

Figur 8 zeigt einen etwas abgewandelten alternativen Verstemmvorgang, bei dem ein modifiziertes Verstemmwerkzeug 18 in eine von der axialer Richtung 6 geringfügig abweichende modifizierte Verstemmrichtung 19 bewegt wird. Die Verstemmrichtung 19 ist winklig zu der axialen Richtung 6 angeordnet, bevorzugt ist der Winkel zwischen der Verstemmrichtung 19 und der axialen Richtung kleiner als 30°.

Um in der Profilhülse 3 durch den Verstemmvorgang keine Verformung oder Verspannung zu erzeugen, ist die Profilhülse 3 mit einer Entlastungsöffnung 20 versehen, die in axialer Richtung 6 hinter dem inneren Ende des Schlitzes 15 mit der axialen Anschlagfläche 14 angebracht ist. Die Entlastungsöffnung 20 hat nur einen geringfügigen Abstand zur axialen Anschlagfläche 14 des Schlitzes 13, so dass das zwischen der axialen Anschlagfläche 14 und der Entlastungsöffnung 20 verbleibende Material der Profilhülse 3 leicht verformbar ist. Wenn während des oben genannten Verstemmvorgangs der Vorsprung 13 erzeugt wird, wird der entstandene Vorsprung 13 zum Ende des Verstemmvorgangs hin gegen die axiale Anschlagfläche 14 der Profilhülse 3 gepresst. Dabei kann sich das Material der Profilhülse 3 insbesondere in axialer Richtung 6 verformen. Die Entlastungsöffnung 20 gewährleistet, dass sich die genannte Verformung von der axialen Anschlagfläche 14 ausgehend in die Entlastungsöffnung 20 hinein erstreckt und das die Entlastungsöffnung 20 umgebenden Material der Profilhülse 3 nicht weiter verformt oder unter Spannung gesetzt werden kann. Auf diese Weise wird sichergestellt, dass das äußere Wellenteil 4 im späteren Betrieb der erfindungsgemäßen Lenkwelle 1 ungehindert auf der Profilhülse 3 in axialen Richtung 6 verschiebbar ist.

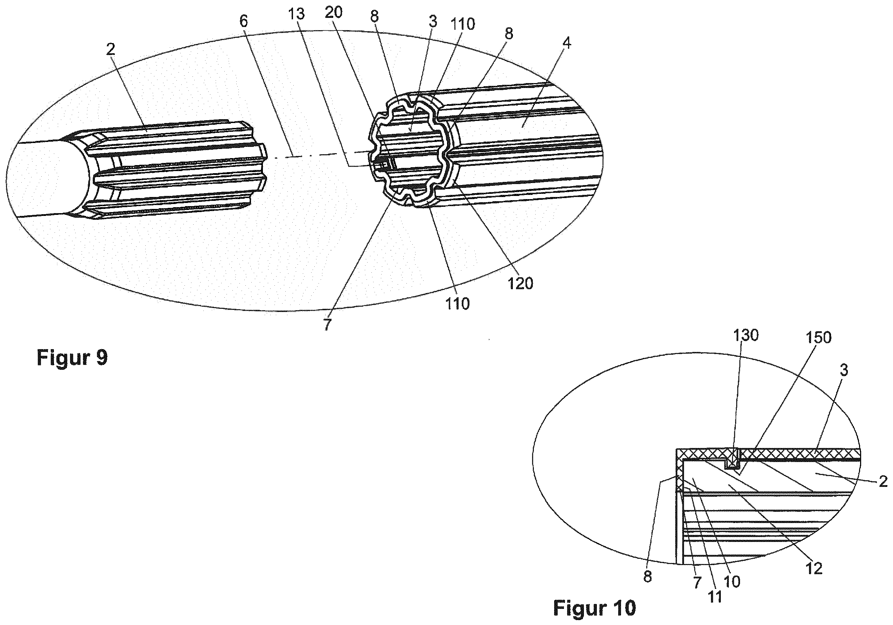

Figur 9 zeigt eine Detailansicht einer teilweise auseinander gezogenen Lenkwelle 1 in einer weiteren Ausführungsform, wobei die Profilhülse 3 in dem äußeren Wellenteil 4 eingeschoben und fixiert ist. Die Profilhülse 3 ist daher in einem ersten Endbereich 7 mit einem als Anschlag ausgebildeten radial nach außen ragenden Bund 8 ausgestattet, der den freien Hindurchgang der Profilhülse 3 in das äußere Wellenteil 4 hinein verhindert. Bei der Montage wird die Profilhülse 3 mit ihrem zweiten, offenen Endbereich 9 voran in das freie Ende des äußeren Wellenteils 4 geschoben. Die Profilhülse 3 gleitet dabei in das innere Profil des äußeren Wellenteils 2, bis das freie Ende des äußeren Wellenteils 4 im ersten Endbereich 7 der Profilhülse 3 ankommt und eine Stirnfläche 110 des äußeren Wellenteils 4 in der einen axialen Richtung (= Aufschieberichtung) an dem radial außen innen ragenden Bund 8 der Profilhülse 3 anschlägt. Der Bund 8 dient hier also als Anschlag 8 für die Begrenzung der Bewegung der Profilhülse 3 in der einen axialen Richtung 6 beim Einschieben der Profilhülse 3 in das äußere Wellenteil 4.

Noch ist aber die Profilhülse 3 nicht in der anderen axialen Richtung 6, nämlich entgegen der Aufschieberichtung gesichert, so dass sie ohne weiteres wieder aus dem äußeren Wellenteil 4 herausgezogen werden könnte. Für die Fixierung in der anderen axialer Richtung 6 ist eine in einem Endbereich 120 des äußeren Wellenteils 4, der auch das freie Ende umfasst, angeordneter Vorsprung 13 des äußeren Wellenteils 4 vorgesehen, der radial nach innen ragt und an der Profilhülse 3 in der der Aufschieberichtung entgegengesetzten axialen Richtung 6 anliegt. Der Vorsprung 13 ist gegenüber der Stirnfläche 110 des äußeren Wellenteils 4 um einige Millimeter nach innen versetzt angeordnet.

Figur 10 zeigt einen vergrößerten Teilbereich einer weiteren alternativen Ausführungsform des inneren Wellenteils 2 mit Profilhülse 3 mit einem Vorsprung 130 zur Fixierung der Profilhülse 3 auf dem inneren Wellenteil 2. Das innere Wellenteil 2 weist eine Öffnung 150 auf, in die der Vorsprung 130 der Profilhülse eingreift und zur Anlage der Profilhülse 3 an dem inneren Wellenteil 2 in der entgegengesetzten axialen Richtung 6. Der Vorsprung 130 und die Profilhülse 3 sind bevorzugt als einstückiges integrales Bauteil ausgebildet, wobei der Vorsprung 130 als federelastischer Schnapper ausgebildet ist, der radial in die Öffnung 150 des inneren Wellenteils 2 einschnappt. Die Profilhülse 3 ist in einem ersten Endbereich 7 mit einem als Anschlag ausgebildeten, radial nach innen ragenden Bund 8 ausgestattet, der den freien Hindurchgang des inneren Wellenteils 2 verhindert. Bei der Montage wird die Profilhülse 3 mit ihrem zweiten, offenen Endbereich 9 voran über das freie Ende 10 des inneren Wellenteils 2 geschoben. Die Profilhülse 3 gleitet dabei über das äußere Profil des inneren Wellenteils 2, bis das freie Ende 10 des inneren Wellenteils 2 im ersten Endbereich 7 der Profilhülse 3 ankommt und eine Stirnfläche 11 des inneren Wellenteils 2 in der einen axialen Richtung 6 an dem radial nach innen ragenden Bund 8 der Profilhülse 3 anschlägt. Der Bund 8 dient hier also als Anschlag 8 für die Begrenzung der Bewegung der Profilhülse 3 in der einen axialen Richtung 6 beim Aufschieben der Profilhülse 3 auf das innere Wellenteil 2.

Die Erfindung stellt somit eine einfache und kostengünstig herstellbare Fixierung der Profilhülse 3 auf dem inneren Wellenteil 2 bzw. in dem äußeren Wellenteil 4 zu Verfügung, wobei zudem größere Fertigungstoleranzen der Profilhülse 3 tolerierbar sind.

## Patentansprüche

1. Längsverstellbare Lenkwelle (1) für ein Kraftfahrzeug, mit einem inneren Wellenteil (2), das in einem äußeren Wellenteil (4) koaxial und in axialer Richtung (6) der Lenkwelle (1) verschiebbar aufgenommen ist, wobei die beiden Wellenteile (2, 4) im Querschnitt ineinandergreifende Profile zur Übertragung eines Drehmoments aufweisen und zwischen dem inneren Wellenteil (2) und dem äußeren Wellenteil (4) eine Profilhülse (3) angeordnet ist, wobei die Profilhülse (3) in einem ersten Endbereich (7) mindestens einen radial vorstehenden Anschlag (8) zur Anlage an einer Stirnfläche (11, 110) des inneren Wellenteils (2) oder des äußeren Wellenteils (4) in der einen axialen Richtung (6) aufweist, und dass ein radialer Vorsprung (13, 130) an einem der beiden Wellenteile (2, 4) vorgesehen ist zur Anlage der Profilhülse (3) an dem inneren Wellenteil (2) oder dem äußeren Wellenteil (4) in der entgegengesetzten axialen Richtung (6), **dadurch gekennzeichnet dass** ein Endbereich (12) des inneren Wellenteils (2) oder des äußeren Wellenteils (4) mit dem radialen Vorsprung (13) zur Anlage der Profilhülse (3) in der entgegengesetzten axialen Richtung (6) versehen ist, und dass die Profilhülse (3) im ersten Endbereich (7) einen in axialer Richtung offenen Schlitz (15) aufweist, in den der radiale Vorsprung (13) hinein ragt.

2. Lenkwelle nach Anspruch 1, **dadurch gekennzeichnet, dass** der radiale Vorsprung (13) als Materialaufwurf des inneren Wellenteils (2) oder des äußeren Wellenteils (4) ausgebildet ist.

3. Lenkwelle nach Anspruch 2, **dadurch gekennzeichnet, dass** der Vorsprung (13) als Verstemmung in axialer Richtung (6) ausgehend von der Stirnfläche (11) eingebracht ist.

4. Lenkwelle nach einem der Ansprüche 1 bis 3, **dadurch gekennzeichnet, dass** die Profilhülse (3) in axialer Richtung (6) neben dem inneren Ende (14) des Schlitzes (15) mit einer Entlastungsöffnung (20) versehen ist.

5. Lenkwelle nach einem der vorhergehenden Ansprüche, **dadurch gekennzeichnet, dass** der radial vorstehende Anschlag (8) als umlaufender Bund der Profilhülse (3) ausgestaltet ist.

## Claims

1. Longitudinally adjustable steering shaft (1) for a motor vehicle, having an inner shaft part (2) which is received in an outer shaft part (4) so as to be displaceable coaxially and in an axial direction (6) of the steering shaft (1), wherein the two shaft parts (2, 4) comprise profiles which interlock in cross section for transmitting a torque and a profile sleeve (3) is arranged between the inner shaft part (2) and the outer shaft part (4), wherein the profile sleeve (3) comprises in a first end region (7) at least one radially protruding stop (8) for abutment against an end face (11, 110) of the inner shaft part (2) or of the outer shaft part (4) in the one axial direction (6), and in that a radial projection (13, 130) is provided on one of the two shaft parts (2, 4) for the abutment of the profile sleeve (3) against the inner shaft part (2) or the outer shaft part (4) in the opposite axial direction (6), **characterized in that** an end region (12) of the inner shaft part (2) or of the outer shaft part (4) is provided with the radial projection (13) for the abutment of the profile sleeve (3) in the opposite axial direction (6), and **in that** the profile sleeve (3) comprises in the first end region (7) a slot (15) which is open in the axial direction and into which the radial projection (13) projects.

2. Steering shaft according to Claim 1, **characterized in that** the radial projection (13) is realized as material throw-up of the inner shaft part (2) or of the outer shaft part (4).

3. Steering shaft according to Claim 2, **characterized in that** the projection (13) is introduced as caulking in the axial direction (6) proceeding from the end face (11) .

4. Steering shaft according to one of Claims 1 to 3, **characterized in that** the profile sleeve (3) is provided with a relief opening (20) in the axial direction (6) next to the inner end (14) of the slot (15).

5. Steering shaft according to one of the preceding claims, **characterized in that** the radially protruding stop (8) is designed as a circumferential collar of the profile sleeve (3).

## Revendications

1. Arbre de direction réglable en longueur (1) pour un véhicule automobile, comprenant une partie d'arbre intérieure (2) qui est reçue de manière déplaçable coaxialement dans une partie d'arbre extérieure (4) et dans la direction axiale (6) de l'arbre de direction (1), les deux parties d'arbre (2, 4) présentant, en section transversale, des profils s'engageant l'un dans l'autre pour le transfert d'un couple et une douille profilée (3) étant disposée entre la partie d'arbre intérieure (2) et la partie d'arbre extérieure (4), la douille profilée (3) présentant, dans une première région d'extrémité (7), au moins une butée faisant saillie radialement (8), prévue pour s'appliquer contre une surface frontale (11, 110) de la partie d'arbre intérieure (2) ou de la partie d'arbre extérieure (4) dans l'une des directions axiales (6), et une saillie radiale (13, 130) étant prévue au niveau de l'une des deux parties d'arbre (2, 4), pour l'application de la douille profilée (3) contre la partie d'arbre intérieure (2) ou contre la partie d'arbre extérieure (4) dans la direction axiale opposée (6),
**caractérisé en ce qu'**une région d'extrémité (12) de la partie d'arbre intérieure (2) ou de la partie d'arbre extérieure (4) est pourvue de la saillie radiale (13) pour l'application de la douille profilée (3) dans la direction axiale opposée (6), et **en ce que** la douille profilée (3) présente, dans la première région d'extrémité (7), une fente ouverte (15) dans la direction axiale dans laquelle pénètre la saillie radiale (13).

2. Arbre de direction selon la revendication 1, **caractérisé en ce que** la saillie radiale (13) est réalisée sous forme de projection de matériau de la partie d'arbre intérieure (2) ou de la partie d'arbre extérieure (4).

3. Arbre de direction selon la revendication 2, **caractérisé en ce que** la saillie (13) est introduite sous forme de matage dans la direction axiale (6) à partir de la surface frontale (11).

4. Arbre de direction selon l'une quelconque des revendications 1 à 3, **caractérisé en ce que** la douille profilée (3) est pourvue d'une ouverture de décharge (20) dans la direction axiale (6) à côté de l'extrémité intérieure (14) de la fente (15).

5. Arbre de direction selon l'une quelconque des revendications précédentes, **caractérisé en ce que** la butée saillant radialement (8) est configurée sous forme d'épaulement périphérique de la douille profilée (3) .
